# EUROPEAN PATENT SPECIFICATION

(11) **EP 1 322 484 B1**
(45) Date of publication and mention of the grant of the patent: **21.09.2005**
(21) Application number: 00963616.8
(22) Date of filing: 19.09.2000
(51) Int. Cl.: B60C 11/00

(54) **METHOD FOR DESIGNING A TIRE WITH REDUCED CAVITY NOISE AND A TIRE DESIGNED ACCORDING TO THE METHOD**
VERFAHREN ZUR KONSTRUKTION EINES REIFENS MIT REDUZIERTEM HOHLRAUMGERÄUSCH UND NACH DEM VERFAHREN AUFGEBAUTER REIFEN
PROCEDE DE CONCEPTION D'UN PNEU A BRUIT DE CAVITE REDUIT ET PNEU CONNU SELON LE PROCEDE

(43) Date of publication of application: 02.07.2003
(73) Proprietor: MICHELIN RECHERCHE ET TECHNIQUE S.A., CH-1763 Granges-Paccot (CH); Société de Technologie Michelin, 63000 Clermont-Ferrand Cedex 09 (FR)
(72) Inventor: TSIHLAS, Dimitri, Greenville, SC 29615 (US); VINESSE, Eric, Tokyo (JP)
(74) Representative: Dequire, Philippe Jean-Marie Denis
(86) International application number: PCT/US2000/025645
(87) International publication number: WO 2002/024473

(56) References cited:
- EP-A- 0 924 111
- US-A- 4 721 143
- US-A- 4 909 295
- US-A- 5 593 521
- US-A- 5 746 848

## Description

### BACKGROUND OF THE INVENTION

The invention relates to a method of designing tires having improved noise characteristics, in particular in relation with the first cavity mode frequency.

Cavity mode noise regularly causes drfficutties to car manufacturers. As cars are to be more and more quiet, the noise generated by the resonance frequency of the air contained in the tire cavity becomes increasingly undesirable.

Different types of solutions have been developed by different manufacturers to reduce the cavity noise and/or other type of noise. For example, such solutions may use the following features:
- foam material on rim;
- Helmholtz or quarter-wave resonators either placed in the wheel or in an insert provided in the wheel cavity.
   Most of the known solutions seem to give positive test results. However, they all require an additional element inside the tire/wheel assembly, or modifications of the wheel/rim assembly. A solution which would avoid using such an additional component or such a modification, would therefore be seriously considered by car manufacturers.
   US-A-4 721 143 describes a method for designing tires according to the preamble of claim 1.

### OBJECTS AND STATEMENT OF THE INVENTION

It is thus an object of the invention to provide a method for designing pneumatic tires having improved noise performance, and, in particular, reduced acoustic energy due to the first cavity mode frequency.

It is another object of the invention to provide a tire having improved noise performance, and in particular reduced acoustic energy due to the first cavity mode.

### BRIEF SUMMARY OF THE INVENTION

In order to achieve this, the invention provides a method for designing tires, said tires having architectural elements comprising at least one carcass structure anchored in each side of the tire in a bead, each bead having a base which is intended to be mounted on the tire's design mounting rim, a side wall portion extending radially upward from each bead, a reinforced summit comprising reinforcement cords disposed at a given angle, the side wall portions joining said summit, wherein the method comprises arranging said architectural elements to provide a flexibility level of at least a portion of the summit to allow said portion to vibrate at a frequency substantially corresponding to the cavity mode.

Rather than incorporating a separate sound attenuating device in the tire or wheel, the solution in accordance with the invention modifies the tire architecture to avoid the generation of unwanted sound. A sound attenuating device is therefore no longer required.

In a preferred example, the flexibility level substantially corresponds to a circumferential stiffness of the tire.

According to the invention, the desirable flexibility level in the summit may be provided by arranging the summit reinforcement cords at an angle substantially between 25 and 45 degrees with respect to a circumferential direction and more preferably substantially equal to 30 degrees with respect to a circumferential direction.

The tire reinforcement cords are advantageously arranged so that the tire mode frequency substantially corresponds to the cavity mode frequency. By comparison, a standard prior art tire is usually "quasi-rigid" for cavity, i.e. its own natural mode is not in a frequency range similar to the cavity. Using the method of the invention, the tire is designed so that the tire natural mode at which the tire summit deforms is near the cavity mode.

Tests show that if a tire is designed so that the tire mode frequency is relatively near the cavity mode frequency, the vibration is substantially reduced or, better, suppressed compared to the conventionally designed tire.

Accordingly, and more specifically, the method comprises the steps of mounting and inflating a subject tire on a rim, loading the subject tire on a flat surface, determining the cavity mode frequencies and the tire mode frequencies, comparing the first cavity mode frequency with the tire mode frequency at which the summit deforms to determine a frequency difference, measuring or computing the tire circumferential stiffness, and modifying the architecture of the tire to reduce the circumferential stiffness at a central zone of the tire to minimize the frequency difference.

According to the invention, the flexibility level is preferably optimized in particular in the substantially central portion of the summit.

According to one embodiment, the summit reinforcement cords are advantageously disposed axially on each side of a substantially circumferential non-reinforced band. The non-reinforced band is preferably substantially axially central.

According to another embodiment, the summit reinforcement cords in an axially center portion are at a greater angle relative to the circumferential direction than the summit reinforcement cords of portions on axially opposite sides of the center portion.

According to a preferred embodiment, the method also comprises the step that the tire architectural elements are adapted to optimize said tire's circumferential stiffness in order to obtain a frequency difference between the tire mode and the cavity mode minimized or at least lower than a given value.

This given value may for instance be selected in order to get a satisfactory acoustic energy level due to the first cavity mode.

### BRIEF DESCRIPTION OF THE DRAWINGS

Figure 1 illustrates a flowchart of the general methodology of the invention;
Figure 2 illustrates a schematic tire modal deformation allowing absorption of the cavity acoustic energy;
Figure 3 illustrates an example of an arrangement of some tire architectural elements without reinforcement cords in the central portion of the summit;
Figure 4 illustrates schematically an arrangement in the summit of reinforcement cords with varying angles between the shoulder and the summit;
Figure 5 illustrates a schematic cut view of a tire having additional reinforcement cords along the shoulder;
Figure 6 illustrates a schematic cut view of a tire having a triple reinforcement configuration.

### DETAILED DESCRIPTION OF THE INVENTION

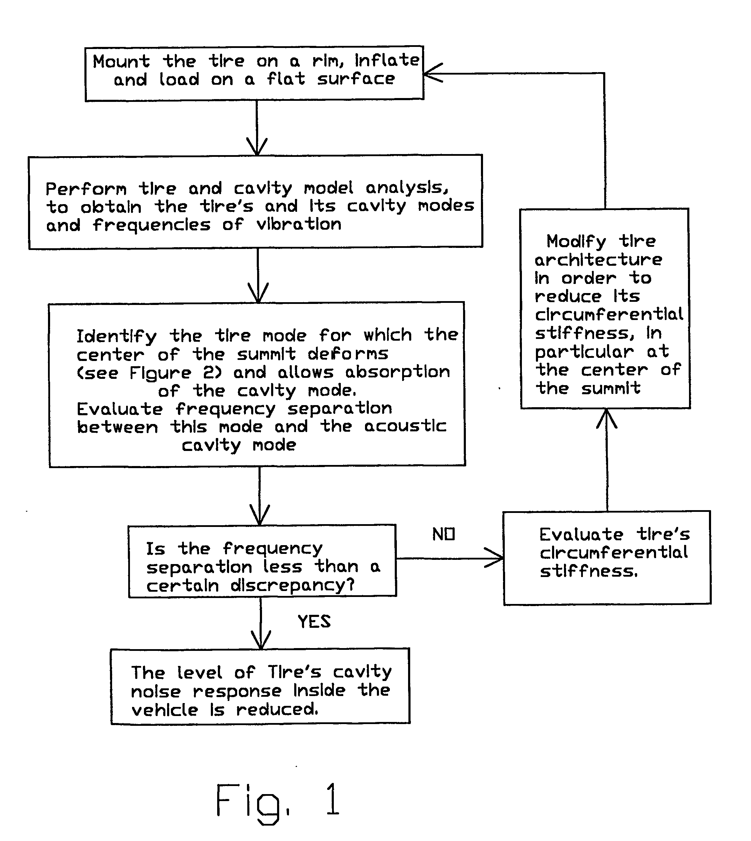

Figure 1 is a flow chart illustrating the general methodology of the invention. The method may be carried out using either finite element simulation or experimentally. Different tire designs may be used as a starting point to compare the behavior of each tire with respect to noise due to cavity resonance. Alternatively, the method may be used to design a unique tire having advantageous cavity resonance characteristics.

The inventor discovered that a tire frequency mode at which the summit of the tire deforms can be determined for certain summit architectures, and further, that the noise transmitted from such a tire is related to a difference between the tire frequency mode and the cavity frequency mode. Further, the inventor discovered that the tire frequency mode can be changed by modifying the tire architecture, while the cavity frequency mode is fixed for a given interior volume, thus, allowing a method for controlling noise transmission.

According to the method of the invention, a first step is to test or evaluate the tire characteristics of a subject tire, which is mounted on a rim, inflated and loaded. A known type modal analysis of the tire and the cavity is performed, in order to identify and characterize the modes and frequencies of vibration of the tire and of the cavity.

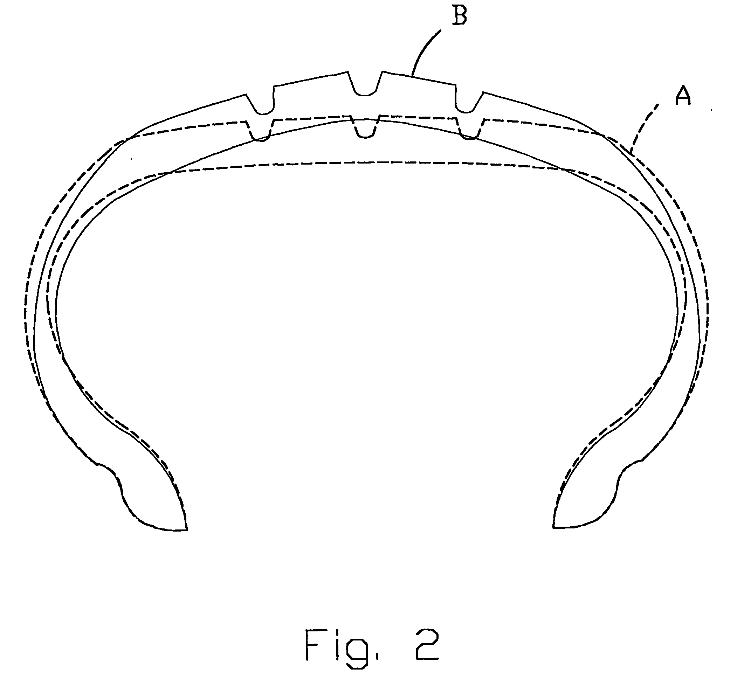

Particular attention should be given to the substantially central portion of the summit, to identify the tire mode at which the center of the summit deforms and allows absorption (partial or total) of the cavity mode. Figure 2 illustrates schematically a vibration mode deformation of the tire that absorbs cavity acoustic energy. As may be seen, a substantially central portion of the summit deforms from an undisturbed state A (the flatter profile in broken lines) to a deformed state B (the portion bent upward in the figure). Of course, although not shown, in vibration the tread summit will oscillate between an outwardly deformed positioned and an inwardly deformed position.

The difference in frequency, or frequency separation, between this tire mode and the acoustic cavity mode is then evaluated. The value of the frequency separation is advantageously considered as a design parameter to optimize the tire characteristics. For example, if the separation is less than 60 Hz, the level of tire's cavity noise response inside the vehicle is substantially reduced. Test results showed that frequency separations less than 20 to 30 Hz provided excellent noise energy levels. As the frequency separation is reduced through modifications to the summit architecture, at a given value it may become difficult to further reduce the noise level generated by the cavity resonance.

According to this criterion, if the frequency separation is not optimized, this is an indication that there may be efficient ways to reduce the noise level due to cavity resonance.

The inventor has discovered that the frequency separation can be reduced by reducing the circumferential stiffness. A more flexible summit, in particular, in the substantially central portion of the summit relative to shoulder regions laterally adjacent to the central portion, generally contributes to reduce the frequency separation.

Tests performed with specific architectures showed that a reduction of the circumferential stiffness to less than 800 daN/mm, and most preferably between 300 to 500 daN/mm or less, in a center region contributed to significantly reduce the frequency separation. Moreover, and preferably, if the stiffness is reduced in the substantially axially central portion of the summit, for instance along a circumferential band about 80 mm wide, as compared to the circumferential stiffness of the regions on the axially opposing sides of the band, possibilities to reduce the frequency separation are optimized.

In some cases and for some vehicles, the method of the invention may provide a significant reduction of the noise level. Tests showed noise reductions of 2 to 6 db, depending on the tire and the vehicle.

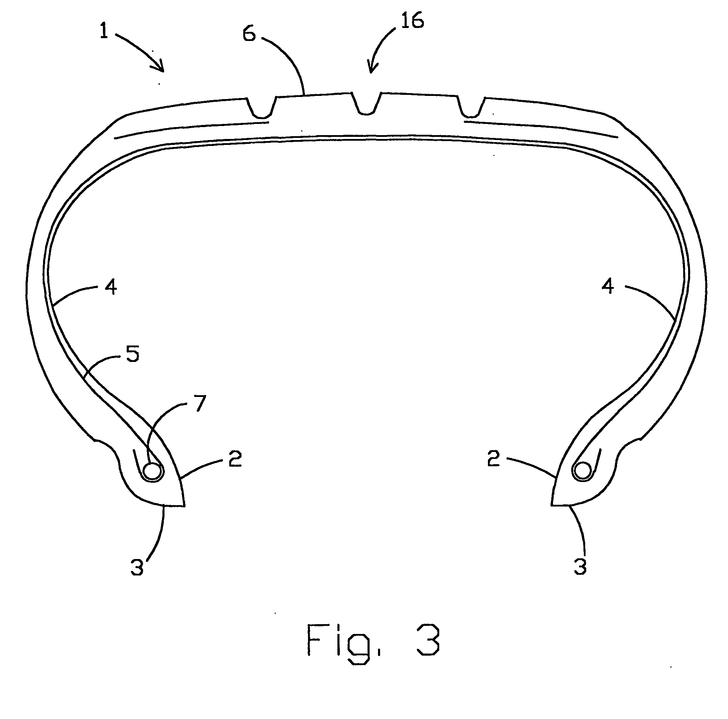

Figures 3 to 6 illustrate examples of tires architectural features allowing a reduction of the circumferential stiffness. Of course, other architectural features may also contribute to circumferential stiffness and can be modified to obtain similar results. Those skilled in the art will also understand that in some specific cases, the stiffness reduction may be limited, for instance with some tire dimensions or because the tire comprises specific architectural elements or arrangements that increases the stiffness.

Referring in general to Figures 3 to 6, the tire 1 comprises beads 2, each provided with a seat 3, specially adapted to fit on the tire's mounting rim. A side wall 4 extends radially upward from each bead 2 and joins a summit 6.

The tire comprises at least one carcass structure 5, extending from bead to bead or leaving a gap between two half structures, for instance in the substantially median portion of the summit 6. The radially inwardmost extent of the carcass structure 5 terminates in an anchoring zone 7 of the bead 1.

The summit 6 architecture may vary depending on the type of tire, its dimensions, the desired characteristics and performance, etc. Figures 3 to 6 illustrate examples of summit arrangements designed in accordance with the method of the invention.

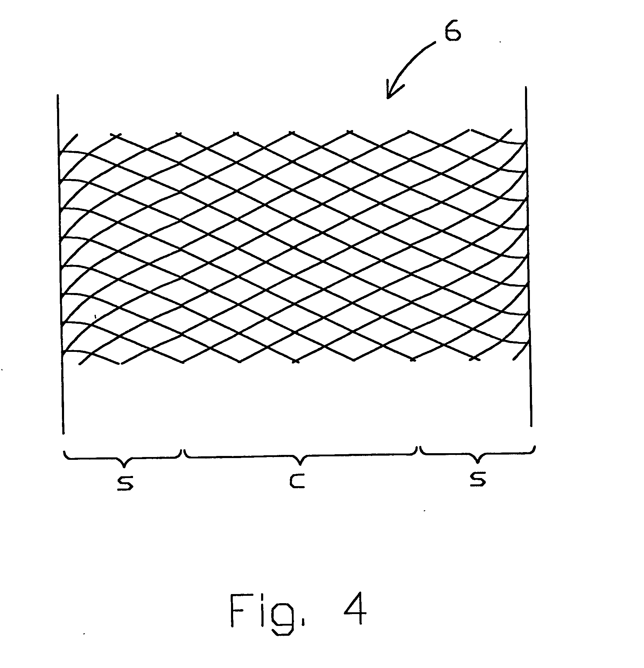

Figure 3 illustrates an example of a tire architecture in which the reinforcement cords at the center of the summit are eliminated, creating a circumferentially extending non-reinforced zone 16, for instance about 80 mm wide. The non-reinforced zone 16 has a circumferential stiffness less than 800 daN/mm. The adjacent reinforced zones have higher circumferential stiffness. The inventor has discovered that a less stiff zone at a center of the tire summit compared to shoulder areas would have a good acoustic behavior. However, a tire with a total suppression of the reinforcement in the center region could have a limited durability or endurance. Other architectural elements to compensate those aspects, could be used. Considering that tires are generally designed with compromises between many characteristics, often contradictory, Figures 4 to 6 illustrate other examples with some type of compromises in which the cavity noise have been considered with other design characteristics.

The example of Figure 4 is provided, in the summit portion 6, with reinforcement cords which each are laid with varying angles from the shoulder to the center of the summit. Typical angles are between 0 to 25 degrees at the shoulder S and between 25 to 45 degrees in the center C. Preferably, the center region C is about 80 mm wide. Additional cords such as for instance cords disposed in the circumferential direction may also be provided. The reinforcing cords could be continuous cords laid to have varying angles across the summit. Alternatively, three adjacent bands of reinforcing cords could be provided at the two shoulder and center regions with the cords of the specific bands at the described angles.

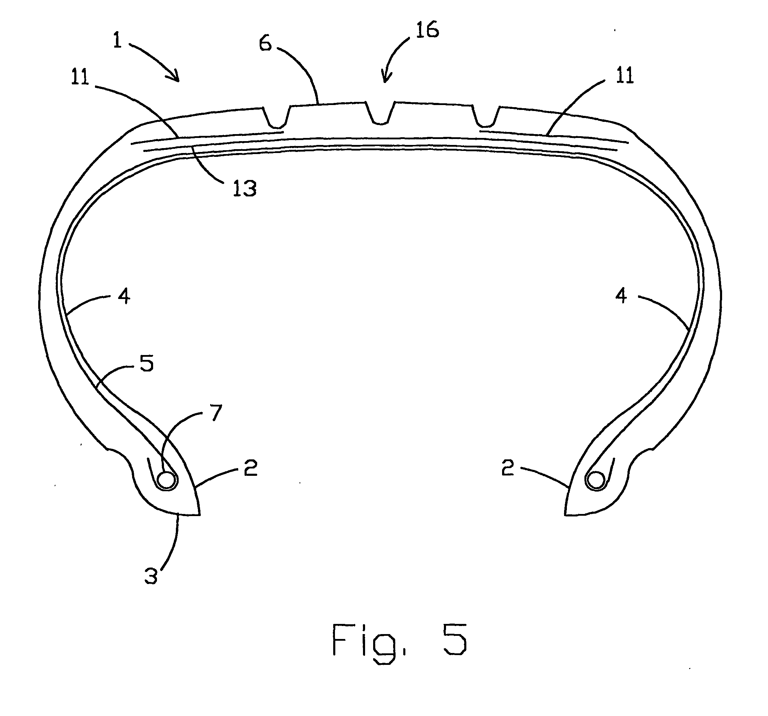

The example of Figure 5 comprises, in addition to the carcass structure 5, one or more layers of reinforcement cords 13 disposed at an angle between 25 to 45 degrees. Additional sets of reinforcement cords 11 are placed in the shoulders of the tire to reinforce the axially outer regions, leaving the center portion with a lower circumferential stiffness. The cords 11 are advantageously oriented in the circumferential direction. Preferably, the sets of cords 11 are spaced to provide a flexible zone of about 80 mm at the center of the summit.

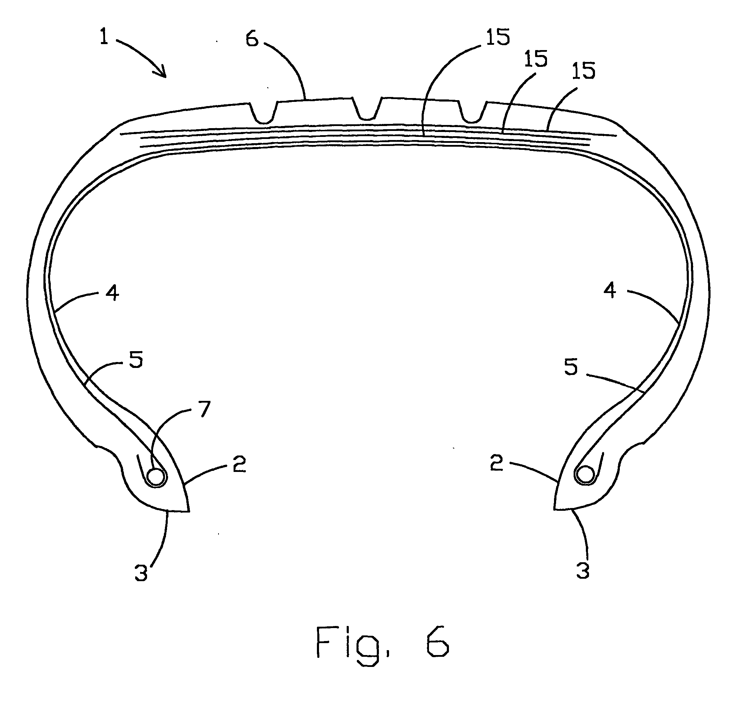

The example of Figure 6 comprises, in addition to the carcass structure 5, a three-belt crown arrangement. The belts 15 may be made either of steel cords or textile cords or hybrid. Combinations with more than one material are also possible. The angles in each belt vary independently from 10 to 70 degrees. For example, a tire having three plies of metallic reinforcing cords oriented respectively at 27 degrees, -55 degrees, and 27 degrees showed a 2 dB decrease in noise as compared to a conventional two-belt tire having metallic reinforcing cords at 24 degrees and -24 degrees, respectively.

In the illustrated examples, the cords are advantageously made of steel. Textile types cords, such as aramid, nylon, PET, PEN, or hybrids such as aramid/nylon, etc., may also be used.

The invention has been described in terms of preferred principles, embodiments, and structure, however, those skilled in the art will recognize that substitutions and equivalents may be used without departing from the scope of the invention defined in the following claims.

## Claims

1. A method for designing tires, said tires having architectural elements comprising at least one carcass structure anchored in each side of the tire in a bead, each bead having a base which is intended to be mounted on the tire's design mounting rim, a side wall portion extending radially upward from each bead, a reinforced summit comprising reinforcement cords disposed at a given angle, the side wall portions joining said summit, the method being **characterised in that** it comprises the steps of arranging said architectural elements to provide a flexibility level of at least a portion of the summit to allow said portion to vibrate at a frequency substantially corresponding to the cavity mode.

2. Method for designing tires according to claim 1, wherein said flexibility level substantially corresponds to a circumferential stiffness of the tire.

3. Method for designing tires according to any one of preceding claims, wherein said flexibility level is optimized in the substantially central portion of the summit to provide a flexibility difference between the central portion and axially outer portions of the summit.

4. Method for designing tires according to any one of preceding claims, wherein the tire reinforcement cords are arranged so that the tire mode frequency substantially corresponds to the cavity mode frequency.

5. Method for designing tires according to any one of claims 1 to 4, wherein the summit reinforcement cords are arranged at an angle substantially between 25 and 45 degrees with respect to a circumferential direction.

6. Method for designing tires according to any one of claims 1 to 4, wherein the summit reinforcement cords are arranged at an angle substantially equal to 30 degrees with respect to a circumferential direction.

7. Method for designing tires according to any one of claims 1 to 4, wherein the summit reinforcement cords in an axially center portion are positioned at a greater angle relative to the circumferential direction than are the summit reinforcement cords of portions on axially opposite sides of the center portion.

8. Method for designing tires according to any one of claims 1 to 4, wherein the summit reinforcement cords are disposed axially on each side of a substantially circumferential non-reinforced band.

9. Method for designing tires according to claim 8, wherein said non-reinforced band is substantially an axially central band approximately 80 mm wide.

10. Method for designing tires according to any one of preceding claims, the method comprising the step of adapting the tire architectural elements to optimize the tire's circumferential stiffness in order to minimize a frequency separation between the tire mode and the cavity mode.

11. Method for designing tires according to any one of preceding claims further comprising the following steps :
- mounting a subject tire on a rim and inflating the tire,
- loading the subject tire on a flat surface,
- determining the cavity mode frequencies and the tire mode frequencies,
- comparing a first cavity mode frequency with a tire mode frequency at which the summit deforms to determine a frequency difference,
- measuring the tire circumferential stiffness, and
- modifying the architecture of the tire to reduce the circumferential stiffness to minimize the frequency difference.

## Patentansprüche

1. Verfahren zur Konstruktion von Reifen, wobei die Reifen Bauelemente aufweisen, die mindestens eine Karkassenstruktur, die auf jeder Seite des Reifens in einem Wulst verankert ist, wobei jeder Wulst eine Basis aufweist, die auf die Montagefelge zum Aufbau des Reifens montiert werden soll, einen Seitenwandteil, der sich von jedem Wulst in radialer Richtung nach oben erstreckt, und einen verstärkten Scheitel umfassen, der mit einem gegebenen Winkel angeordnete Verstärkungskorde enthält, wobei die Seitenwandteile an den Scheitel angrenzen, wobei das Verfahren **dadurch gekennzeichnet ist, dass** es die Schritte umfasst, die Bauelemente so anzuordnen, dass zumindest für einen Teil des Scheitels ein Biegsamkeitsniveau erreicht wird, wodurch dieser Teil in einer Frequenz schwingen kann, die im Wesentlichen der Mode des Hohlraums entspricht.

2. Verfahren zur Konstruktion von Reifen nach Anspruch 1, worin das Biegsamkeitsniveau im Wesentlichen einer Umfangssteifigkeit des Reifens entspricht.

3. Verfahren zur Konstruktion von Reifen nach einem der vorhergehenden Ansprüche, worin das Biegsamkeitsniveau in dem im Wesentlichen zentralen Teil des Scheitels optimiert wird, um einen Unterschied in der Biegsamkeit zwischen dem zentralen Teil und den in axialer Richtung außen gelegenen Teilen des Scheitels zu erzielen.

4. Verfahren zur Konstruktion von Reifen nach einem der vorhergehenden Ansprüche, worin die Korde zur Verstärkung des Reifens so angeordnet werden, dass die Frequenz der Mode des Reifens im Wesentlichen der Frequenz der Mode des Hohlraums entspricht.

5. Verfahren zur Konstruktion von Reifen nach einem der Ansprüche 1 bis 4, worin die Korde zur Scheitelverstärkung mit einem Winkel angeordnet werden, der bezogen auf die Umfangsrichtung im Wesentlichen im Bereich von 25 bis 45 Grad liegt.

6. Verfahren zur Konstruktion von Reifen nach einem der Ansprüche 1 bis 4, worin die Korde zur Scheitelverstärkung mit einem Winkel angeordnet werden, der bezogen auf die Umfangsrichtung im Wesentlichen bei 30 Grad liegt.

7. Verfahren zur Konstruktion von Reifen nach einem der Ansprüche 1 bis 4, worin die Korde zur Scheitelverstärkung in einem in axialer Richtung zentralen Bereich mit einem größeren Winkel gegen die Umfangsrichtung angeordnet werden als die Korde zur Scheitelverstärkung der Bereiche, die in axialer Richtung an den zentralen Teil angrenzen.

8. Verfahren zur Konstruktion von Reifen nach einem der Ansprüche 1 bis 4, worin die Korde zur Scheitelverstärkung in axialer Richtung auf beiden Seiten eines im Wesentlichen in Umfangsrichtung nicht verstärkten Bandes angeordnet werden.

9. Verfahren zur Konstruktion von Reifen nach Anspruch 8, worin das nicht verstärkte Band im Wesentlichen ein in axialer Richtung zentrales Band mit einer Breite von etwa 80 mm ist.

10. Verfahren zur Konstruktion von Reifen nach einem der vorhergehenden Ansprüche, wobei das Verfahren den Schritt umfasst, die Bauelemente des Reifens anzupassen, um die Umfangssteifigkeit des Reifens so zu optimieren, dass ein Frequenzabstand zwischen der Mode des Reifens und der Mode des Hohlraums auf ein Mindestmaß herabgesetzt ist.

11. Verfahren zur Konstruktion von Reifen nach einem der vorhergehenden Ansprüche, das weiterhin folgende Schritte umfasst:
- Montieren eines betreffenden Reifens auf eine Felge und Aufpumpen des Reifens,
- unter Last Setzen des betreffenden Reifens auf einer ebenen Fläche,
- Bestimmung der Frequenzen der Mode des Hohlraums und der Frequenzen der Mode des Reifens,
- Vergleich der Frequenz der ersten Mode des Hohlraums mit der Frequenz der Mode des Reifens, bei der sich der Scheitel verformt, zur Bestimmung eines Frequenzunterschieds,
- Bestimmung der Umfangssteifigkeit des Reifens und
- Modifikation der Architektur des Reifens, um die Umfangssteifigkeit zur Minimierung des Frequenzunterschieds herabzusetzen.

## Revendications

1. Procédé de conception de pneus, lesdits pneus présentant des éléments architecturaux qui comprennent au moins une structure de carcasse ancrée de chaque côté du pneu dans un bourrelet, chaque bourrelet présentant une base destinée à être montée sur la jante de montage du modèle de pneu, une partie formant paroi latérale qui s'étend radialement vers le haut depuis chaque bourrelet, un sommet renforcé comprenant des fils de renfort disposés à un angle donné, les parties formant les parois latérales se reliant audit sommet, le procédé étant **caractérisé en ce qu'**il comprend les étapes qui consistent à agencer lesdits éléments structurels de manière à obtenir au moins sur une partie du sommet un niveau de souplesse qui permet à ladite partie de vibrer à une fréquence qui correspond essentiellement au mode propre de vibration de la cavité.

2. Procédé de conception de pneus selon la revendication 1, dans lequel ledit niveau de souplesse correspond essentiellement à une rigidité périphérique du pneu.

3. Procédé de conception de pneus selon l'une quelconque des revendications précédentes, dans lequel ledit niveau de souplesse est optimisé dans la partie essentiellement centrale du sommet de manière à obtenir une différence de souplesse entre la partie centrale et les parties axialement extérieures du sommet.

4. Procédé de conception de pneus selon l'une quelconque des revendications précédentes, dans lequel les fils de renfort du pneu sont agencés de telle sorte que la fréquence du mode propre de vibration du pneu corresponde essentiellement à la fréquence du mode propre de vibration de la cavité.

5. Procédé de conception de pneus selon l'une quelconque des revendications 1 à 4, dans lequel les fils de renfort du sommet sont agencés à un angle situé essentiellement entre 25 et 45 degrés par rapport à la direction périphérique.

6. Procédé de conception de pneus selon l'une quelconque des revendications 1 à 4, dans lequel les fils de renfort du sommet sont agencés à un angle essentiellement égal à 30 degrés par rapport à la direction périphérique.

7. Procédé de conception de pneus selon l'une quelconque des revendications 1 à 4, dans lequel les fils de renfort du sommet dans une partie axialement centrale sont disposés à un plus grand angle par rapport à la direction périphérique que les fils de renfort du sommet situés dans des parties situées sur des côtés axialement opposés de la partie centrale.

8. Procédé de conception de pneus selon l'une quelconque des revendications 1 à 4, dans lequel les fils de renfort du sommet sont disposés axialement de chaque côté d'une bande non renforcée essentiellement périphérique.

9. Procédé de conception de pneus selon la revendication 8, dans lequel ladite bande non renforcée est située essentiellement sur une bande axialement centrale d'une largeur approximative de 80 mm.

10. Procédé de conception de pneus selon l'une quelconque des revendications précédentes, le procédé comprenant l'étape qui consiste à adapter les éléments architecturaux du pneu de manière à optimiser la rigidité périphérique du pneu pour minimiser la séparation en fréquence entre le mode propre de vibration du pneu et le mode propre de vibration de la cavité.

11. Procédé de conception de pneus selon l'une quelconque des revendications précédentes, qui comporte en outre les étapes suivantes :
- monter un pneu concerné sur une jante et gonfler le pneu,
- charger le pneu concerné sur une surface plane,
- déterminer les fréquences des modes propres de vibration de la cavité et les fréquences des modes propres de vibration du pneu,
- comparer la fréquence d'un premier mode propre de vibration de la cavité à la fréquence du mode propre de vibration du pneu à laquelle le sommet se déforme, de manière à déterminer une différence entre les fréquences,
- mesurer la rigidité périphérique du pneu et
- modifier l'architecture du pneu en vue de réduire la rigidité périphérique et minimiser la différence entre les fréquences.
